# EUROPEAN PATENT APPLICATION

(11) **EP 4 207 373 A1**
(43) Date of publication of application: **05.07.2023**
(21) Application number: 22213741.6
(22) Date of filing: 15.12.2022
(51) Int. Cl.: H01M 4/36, C22C 13/00, C22C 30/04, H01M 4/38

(54) **COMPOSITE NEGATIVE ACTIVE MATERIAL BALL**

(30) Priority: 04.01.2022 US 202263296299 P; 08.12.2022 US 202218077542
(71) Applicant: Prologium Technology Co., Ltd., Taoyuan City (TW)
(72) Inventor: YANG, Szu-Nan, Taoyuan City (TW)
(74) Representative: Cabinet Chaillot

(57) **Abstract**

The invention discloses a composite negative active material ball, which includes an electrically conductive metal core, which is substantially without pores, and a plurality of silicon or silicon compound particles, which is distributed on the surface of electrically conductive metal core. Partial volume of the silicon or silicon compound particles are embedded into the electrically conductive metal core. The silicon or silicon compound particles can maintain the well contact of the electrically conductive metal core during alloying/dealloying with lithium. Therefore, the composite negative active material ball have good electrical transfer characteristics.

## Description

### BACKGROUND OF THE INVENTION

### CROSS REFERENCES TO RELATED APPLICATIONS

This application claims benefit under 35 U.S.C.§119(a) of U.S. Provisional Patent Application No. 63/296,299 filed January 04, 2022, and the entire contents of which are hereby incorporated by reference for all purposes.

### Field of Invention

The present invention is related to a negative active material of the lithium battery, in particular to a composite negative active material ball with common electrically conductive metal core.

### Related Art

Compared to other energy storage devices, due to the higher energy density and/or longer cycle life of lithium-ion batteries, they are widely used in various products, such as vehicles, wearable products for consumer and industrial applications, portable equipment and energy storage equipment and etc. They are found in almost every field of human daily life.

The commonly used negative active material for lithium-ion batteries is graphite. However, due to the limitation of theoretical discharge capacity, about 360 mAh/g, the use of graphite in high-capacity lithium batteries is limited. Therefore, other materials capable of alloying with lithium, such as silicon, are gradually to replace graphite as the negative active material of lithium-ion batteries. Although silicon has a theoretical capacity of 4200 mAh/g, which is significantly superior to graphite, the volume expansion of the silicon would be occurred by 300% or higher during charging and discharging. The force resulting from the expansion will cause silicon to rupture along the crystalline or boundary.

Therefore, various new structure have been proposed to solve the application of silicon in the negative electrode of the lithium battery. For example, silicon nanoparticle or nano wire is adapted to increase the surface by minimize the particle sizes. The force resulting from the expansion will be released to avoid cracking. However, after nanonization of silicon, more electrically conductive materials and adhesives are required. The proportion of the active materials that can perform electrochemical reactions in the electrode is significant reduced. Moreover, nanonization of silicon will result in too large surface area and difficult dispersion. The preparation of slurry will become more difficult. Furthermore, the larger surface area also leads to an increase in the area of the SEI layer with a higher resistance value, and a larger amount of SEI layer. More lithium resources would be consumed. Therefore, a secondary micro particle structure is formed by stacking and agglomerating several nanoscale silicon. In this structure, the silicon located inside can avoid the formation of the SEI layer. The volume change caused of the silicon by the reaction with lithium, results in gaps between the silicon particles, which are contacted to each other in original state. The lithium cannot be diffused through the contact points of the silicon particles any more.

Another proposed structure is microscale silicon spheres with nano-holes, which can absorb the volume expansions. However, with the same weight, the surface area of microscale silicon spheres with nanoholes is almost the same as that of nanoscale silicon spheres without holes. Therefore, in the case that the electrolyte can permeate into the nano-holes to form an SEI layer, there are still problems of a large amount of the SEI layer regeneration and lithium resource consumption.

In order to solve the above shortcomings, it is derived to arrange a filling material, such as SiOx or Si/C, in the nano-holes. After formation, SiOx will form Si and lithium silicate (LiSixOy) as if the lithium silicate is sandwiched by Si. The Si/C will be the carbide existed in the early stage to reduce the formation area to form the SEI layer. However, the formation of the lithium silicate will also lead to consume lithium. The presence of the filling materials will reduce the overall coulombic efficiency and decrease the utilization rate. In addition, a composite structure of using liquid metal to cover several nanoscale silicon powders is proposed, such as the US Patent Application No. 16/514953. The advantages of this structure are relatively small overall surface area, good electrical conductivity and the ability of the liquid metal to absorb the expansion. However, compared with the SEI layer formed by silicon and electrolyte, the SEI layer formed by liquid metal contacting with the electrolyte has poor structural stability and is easy to disintegrate. Furthermore, the coulombic efficiency and utilization rate of liquid metals in electrochemical reactions are also poor.

Accordingly, a composite negative active material ball is provided to overcome the above problems of silicon.

### SUMMARY OF THE INVENTION

It is an objective of this invention to provide a composite negative active material ball. The silicon or silicon compound particles can maintain the well contact with the electrically conductive metal core via the embedded portion when the occurring of volume change of the silicon or silicon compound particles during alloying/dealloying with lithium. Therefore, the composite negative active material ball can maintain good electron transfer characteristics.

It is another objective of this invention to provide a composite negative active material ball. The material of the electrically conductive metal core is selected from the material capable of alloying with the lithium. A prelithiation can be processed on the surface of the electrically conductive metal core before the silicon or silicon compound particles are assembled. Therefore, the electrically conductive metal core is used as a lithium source to reduce the irreversible loss of the lithium ions.

It is another objective of this invention to provide a composite negative active material ball. The shared SEI film is presented between the adjacent silicon or silicon compound particles. Most of the outer surface of the electrically conductive metal core are covered by the silicon or silicon compound particles. Therefore, the loss of the electrolyte is efficiently reduced after the composite negative active material balls are adapted to a lithium battery.

It is another objective of this invention to provide a composite negative active material ball. The microscale electrically conductive metal core is utilized as a carrier to be attached by the nanoscale silicon or silicon compound particles. The mixture of the negative electrode slurry for a lithium battery will have the microscale to be easy to disperse. The shortcomings of nanoscale silicon or silicon compound particles that are easy to agglomerate and difficult to disperse can be solved.

It is another objective of this invention to provide a composite negative active material ball. The hardness of the electrically conductive metal core is lower than that of the silicon or silicon compound particles. Therefore, the electrically conductive metal core can be deformed to absorb the expansions of the silicon or silicon compound particles caused by the expansions of the silicon or silicon compound particles during charging and discharging.

In order to implement the abovementioned, this invention discloses a composite negative active material ball including an electrically conductive metal core and a plurality of silicon or silicon compound particles, which is distributed on the surface of electrically conductive metal core. The electrically conductive metal core has a first average particle size at a room temperature, and the silicon or silicon compound particles have a second average particle size. The silicon or silicon compound particles are directly contacted to the outer surface of the electrically conductive metal core. Parts of the silicon or silicon compound particles are embedded into the electrically conductive metal core. Therefore, the silicon or silicon compound particles can maintain the direct contact of the electrically conductive metal core during the occurring of volume change of the silicon or silicon compound particles. Therefore, the electrically conductive metal core serves as the common internal electrically conductive element of the silicon or silicon compound particles. Also, the first average particle size is more than ten times the second average particle size.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a schematic diagram of the composite negative active material ball of this invention.
FIG. 2 is a schematic diagram of the composite negative active material ball of this invention, when adapted for the battery cell.
FIG. 3 is a schematic diagram of the composite negative active material ball of this invention, showing that the SEI film is shared between the adjacent the silicon or silicon compound particles.
FIG. 4 is a schematic diagram of the composite negative active material ball of this invention, showing that parts of the silicon or silicon compound particles are embedded into the electrically conductive metal core.
FIGS. 5-6 are schematic diagrams of the composite negative active material ball of this invention, showing that the silicon or silicon compound particles are stacked with different particle sizes and the silicon or silicon compound particles are embedded into the electrically conductive metal core.
FIG. 7 is a schematic diagram of the composite negative active material ball of this invention, showing that some of the SEI film of the silicon or silicon compound particles are shared.
FIG. 8 is a schematic diagram of another embodiment of the composite negative active material ball of this invention.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

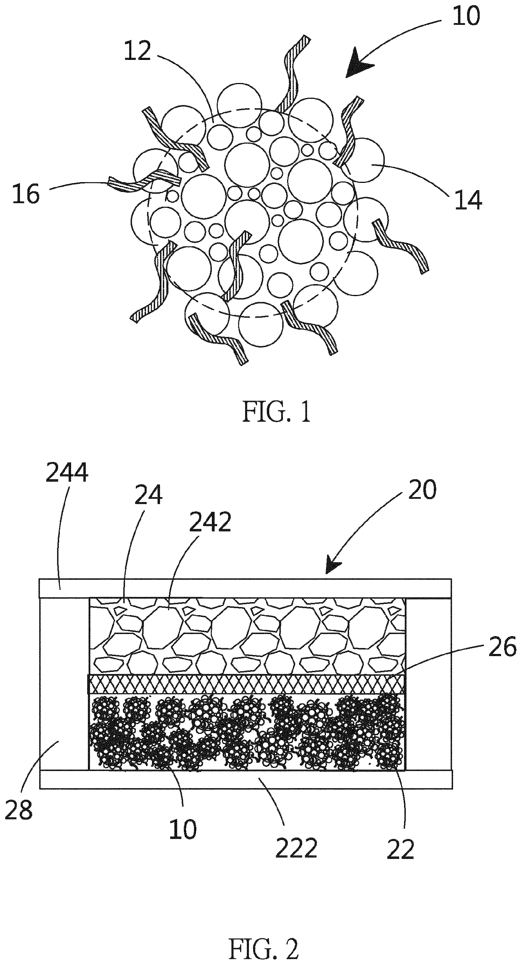

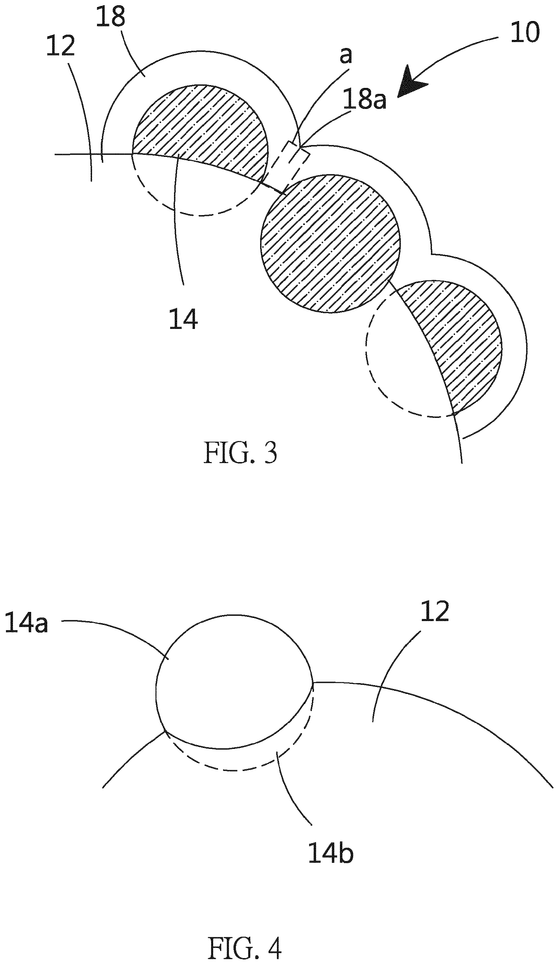

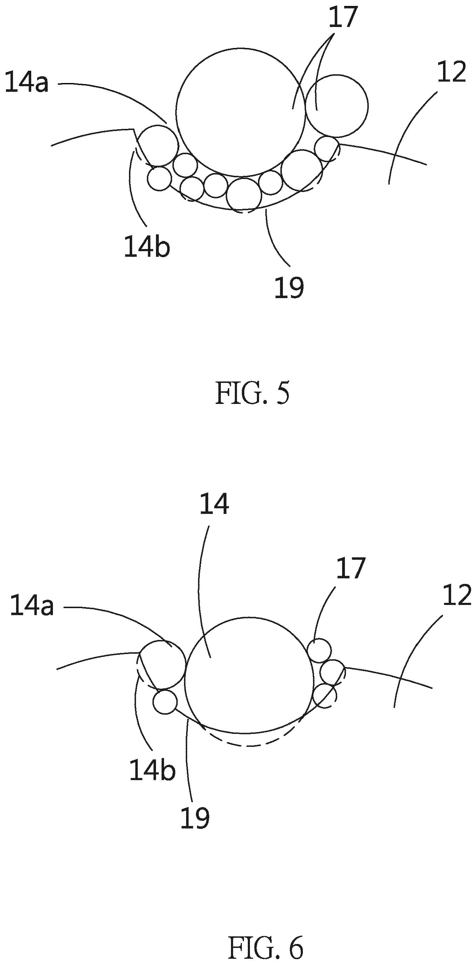

Please refer to FIG. 1. This invention is related to a composite negative active material ball 10 including an electrically conductive metal core 12, which is substantially without pores, a plurality of silicon or silicon compound particles 14, which is distributed on the surface of electrically conductive metal core 12 and an electrically conductive material 16. As shown in FIG. 1, the silicon or silicon compound particles 14 are directly contacted to the surface of the electrically conductive metal core 12. However, please refer to FIGS. 5-7, there may have other silicon or silicon compound particles 17 that are not directly contacted to the surface of the electrically conductive metal core 12. These silicon or silicon compound particles 17 are stacked on the surfaces of the silicon or silicon compound particles 14 to further reduce the surfaces of the electrically conductive metal core 12 that are not covered by the silicon or silicon compound particles 14 from being exposed. In this way, the contact area between the electrically conductive metal core 12 and electrolyte can be further reduced. For the silicon or silicon compound particles 14 which are directly contacted to the outer surface of the electrically conductive metal core 12, parts (partial volume) of the silicon or silicon compound particles 14 are embedded into the electrically conductive metal core 12, i.e. not only single-point contacted or bonded on the outer surface. The embedded portions of the silicon or silicon compound particles 14 are at least 10% of the total volume after formation. The electrically conductive metal core 12 has a first average particle size and a first average hardness at a room temperature, and the silicon or silicon compound particles 14 have a second average particle size and a second average hardness. The first average particle size is more than ten times the second average particle size. The first average particle size is ranging from 0.1 micrometer to 50 micrometer, and the second average particle size is ranging from 10 nanometer to 500 nanometer. The second average hardness is greater than the first average hardness to facilitate parts (partial volume) of the silicon or silicon compound particles 14 being embedded into the electrically conductive metal core 12. As shown in FIG. 4, the silicon or silicon compound particles 14, which are directly contacted to the outer surface of the electrically conductive metal core 12, include an exposed portion 14a, which is exposed from the electrically conductive metal core 12, and an embedded portion 14b, which is embedded into the electrically conductive metal core 12. Therefore, when the volume of the silicon or silicon compound particles 14 are changed caused by alloying/dealloying resulting from lithium-ion extraction and insertion, the silicon or silicon compound particles 14, which are directly contacted to the outer surface of the electrically conductive metal core 12, can maintain the direct contact of the electrically conductive metal core 12 via the embedded portion 14b to make the composite negative active material ball 10 maintain good electron transfer characteristics. Hence, the problem of the electrical transfer voids, caused by the volume change of the silicon or silicon compound particles 14, can be efficiently solved. For example, the voids may be occurred by the repeats of the volumetric expansion and contraction during the alloying/dealloying of the silicon or silicon compound particles 14. When the volume of the of the silicon or silicon compound particles 14 is expanded, the electrically conductive additive, such as carbon black or carbon nanotube, is pushed to move away. When the volume of the of the silicon or silicon compound particles 14 is contracted to recover or crack, a gap will be presented between the moved electrically conductive additive and the silicon or silicon compound particles 14. The electron cannot be transport across the gap, which is so-called the "voids".

The electrically conductive material 16 is directly contacted to the electrically conductive metal core 12, the silicon or silicon compound particles 14 or both. In this invention, once the electrically conductive material 16 is directly contacted to the electrically conductive metal core 12, the electron can be transported to the silicon or silicon compound particles 14 via the electrically conductive metal core 12 or the electron can be transported from the silicon or silicon compound particles 14 to outside. Thereby, the electrically conductive metal core 12 serves as the common internal electrically element of the silicon or silicon compound particles 14.

Moreover, the material of the electrically conductive metal core 12 is selected from the material capable of alloying with the lithium at a first electric potential, and the silicon or silicon compound particles 14 are capable of alloying with the lithium at a second electric potential. The first electric potential is different from the second electric potential. Preferably, the first electric potential is higher than the second electric potential. Therefore, when the silicon or silicon compound particles 14 are alloyed or dealloyed with the lithium, the electrically conductive metal core 12 stays in a passive state, which will not alloy with the lithium. In this passive state, the electrically conductive metal core 12 serves as a diffusion host for the lithium. The diffused lithium is presented as alloys in the electrically conductive metal core 12 to expand the amount of the retained lithium of the composite negative active material ball 10. Moreover, the diffused lithium in the electrically conductive metal core 12 may be expanded to the silicon or silicon compound particles 14 to serve as a lithium source. As mentioned above, the electrically conductive metal core 12 is capable of alloying with the lithium ions. Therefore, the lithium diffusion or doping, also referred as prelithiation, is processed on the surface of the electrically conductive metal core 12 before the silicon or silicon compound particles 14 are assembled. Then the electrically conductive metal core 12 is mixed with the silicon or silicon compound particles 14 to prepare the composite negative active material ball 10 of this invention. The mixing method may be a ball milling process to press parts of the silicon or silicon compound particles 14 to embed into the electrically conductive metal core 12. In practice, the composite negative active material ball 10 is utilized for a battery cell. The prelithiated electrically conductive metal core 12 is used as a lithium source to reduce the irreversible loss of the lithium ions during charging and discharging of the battery cell.

Also, as shown in FIGS. 5-6, the silicon or silicon compound particles 14, 17 are stacked with different particle sizes. The silicon or silicon compound particles 14, which are directly disposed or contacted to the electrically conductive metal core 12, would be partially embedded in the electrically conductive metal core 12. The surface of the electrically conductive metal core 12 is pressed by the silicon or silicon compound particles 14 to form an indentation 19. The silicon or silicon compound particles 14 with different particle sizes may be filled or stacked in the indentation 19. In FIG. 5, the silicon or silicon compound particles 14 with smaller particle sizes are contacted to the indentation 19. The silicon or silicon compound particles 17 with larger particle sizes are stacked on the surface of the silicon or silicon compound particles 14 with smaller particle sizes. In FIG. 6, the silicon or silicon compound particles 14 with smaller and larger particle sizes are contacted to the indentation 19.

The electrically conductive metal core 12 is composed of the metal with a low melting point, which is an alloy formed by mixing at least two of the materials selected from indium (melting point 156.6°C), tin (melting point 231.9°C), aluminum (melting point 660.4°C), bismuth (melting point 271.4°C) or germanium (melting point 937.7°C). The above-mentioned metal with low melting point means that the alloy with the melting point lower than 232°C . For example, an alloy have a composition of 45% tin and 55% bismuth and have a melting point about 150°C. The metal with low melting point has a hardness lower than the hardness of the silicon or silicon compound particles 14. That is the metal with low melting point is softer than the silicon or silicon compound particles 14. Therefore, the electrically conductive metal core 12 may be deformed by pressing from the silicon or silicon compound particles 14. Furthermore, referring to FIG. 1, the electrically conductive metal core 12 is shown as a circle. In practice, the electrically conductive metal core 12 may be shaped as any other geometric patterns or irregular shapes. Moreover, by modifying the compositions of the electrically conductive metal core 12, the electrically conductive metal core 12 may demonstrate a certain softness in the operation temperature of the battery cell. The electrically conductive metal core 12 can be deformed to absorb the expansions of the silicon or silicon compound particles 14 or further to fill in the fissure, caused by the expansions, of the silicon or silicon compound particles 14, 17. When the volume of the silicon or silicon compound particles 14 is contracted during dealloying, the filled metal would be squeezed out. And the squeezed metal can serve as new conductive contact for the silicon or silicon compound particles 14, 17.

The material of the silicon or silicon compound particles 14, 17 is selected from any silicon based negative active materials, such as pure silicon, silicon oxide, silicon nitride or any combinations. By distribution of different particle sizes, the silicon or silicon compound particles 14 can dispose on the surface of the electrically conductive metal core 12, which has high cohesion, to achieve better surface coverage. For example, at least 50% of the outer surface of the electrically conductive metal core 12 are covered or shielded by the silicon or silicon compound particles 14, preferably more than 85%. The particle sizes of the silicon or silicon compound particles 14 is ranging from 10 to 500 nanometer. The nanoscale silicon or silicon compound particles 14 have a higher surface area to volume ratio to increase the reactive area for lithium ions being contact and intercalation. However, because of the agglomeration force, the nanoscale silicon or silicon compound particles 14 are not easy to disperse within the electrode slurry, which is the main obstacle in practice. Therefore, in this invention, the electrically conductive metal core 12 having high cohesion is utilized as a carrier to be attached for the nanoscale silicon or silicon compound particles 14. The main dispersed body of the electrode slurry will be the microscale composite negative active material ball 10, rather than the nanoscale silicon or silicon compound particles 14. The shortcomings of nanoscale particles that are easy to agglomerate and difficult to disperse can be solved.

The electrically conductive material 16 of this invention may include carbon nanotube, graphene, carbon fibers, carbon black, graphite particles, natural graphite, artificial graphite, acetylene black, ketjenblack, metal powder or electrically conductive polymers. The electrically conductive material 16 is not limited to the above-mentioned materials, as long as it may be any conductive material which can be applied in the lithium battery. Once the electrically conductive material 16 is contacted to the electrically conductive metal core 12, the electron can be transferred to the silicon or silicon compound particles 14 contacted to the electrically conductive metal core 12, or from the silicon or silicon compound particles 14. The electrically conductive material 16 may mix with the silicon or silicon compound particles 14 and dispose on the electrically conductive metal core 12.

Please refer to shown in FIG. 2, which is a schematic diagram of the battery cell with the composite negative active material ball. As shown, the composite negative active material balls 10 are mixed with a binder, not shown, and are coated on the surface of the negative current collector 222 to be the negative electrode 22. The battery cell 20 also includes a positive electrode 24 and a separator 26 disposed between the negative electrode 22 and the positive electrode 24. The positive electrode active material 242 of the above-mentioned positive electrode 24 may be selected from any material used in this art without any limitation. For example, a compound capable of insertion and extraction of lithium ions may be used as the positive electrode active material, such as a compound including lithium and a material selected from cobalt, nickel, manganese and combinations thereof.

The electrically conductive material and/or the binder of the positive electrode 24 may be the same or different from that of the negative electrode 22. The separator 26 disposed between the negative electrode 22 and the positive electrode 24 may be made of any available materials in this art, such as a material having low resistance to migration of ions in an electrolyte. For example, the separator 26 may be a plate-form to isolate the negative electrode 22 and the positive electrode 24, which is made of a material selected from glass fiber, polyester, polyethylene, polypropylene, polytetrafluoroethylene (PTFE), and a combination thereof, each of which may be a non-woven or woven fabric with holes. The separator 26 may also be a solid electrolyte. In FIG. 2, the positive current collector 244, the negative current collector 222 and the glue frame 28 sandwiched between the positive current collector 244 and the negative current collector 222 are used as the packaging component of the battery cell 20 to isolate that from the external environment. However, this does not limit the composite negative active material ball 10 of the present invention to only be used in such a battery cell. The composite negative active material ball 10 can be widely used in various battery cells or battery structures, which the silicon-based materials are used as negative active materials.

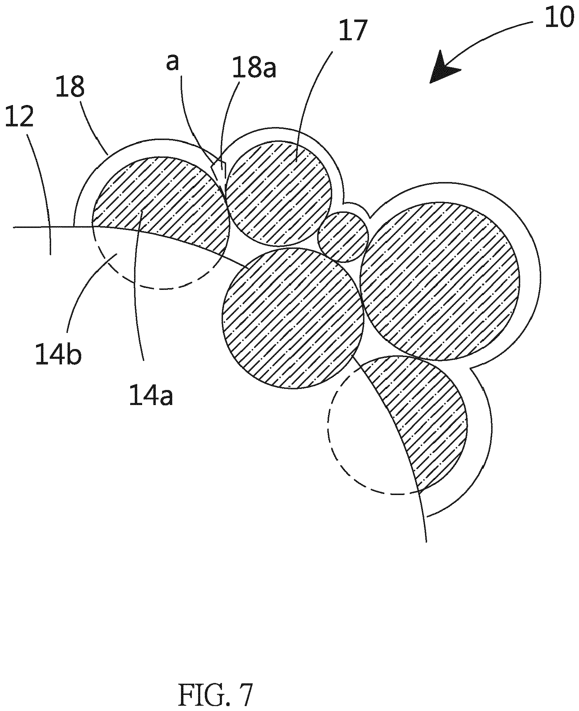

Please refer to FIGS. 3 and 1. As shown in the figures, when the battery composed of the composite negative active material balls 10 of this invention is charged and discharged, a solid electrolyte interface (SEI) film 18 is formed on the surface of the composite negative active material balls 10. The SEI film 18 will be formed on the surface of the substance alloyable with lithium once in contact with the electrolyte. In this invention, most of the outer surface of the electrically conductive metal core 12 are covered by the silicon or silicon compound particles 14 to effectively reduce the contact from the electrolyte to form the SEI film. Therefore, the loss of the electrolyte is reduced. Moreover, the SEI film 18 between two adjacent silicon or silicon compound particles 14 is a shared SEI film 18a, which is the portion marked by a dotted region a in the figure. Compared with the separated silicon or silicon compound raw particles, the amount of the SEI films 18 is reduced due to the present of the shared SEI films 18a. Therefore, the loss of the electrolyte is further reduced. In FIG. 7, the silicon or silicon compound particles 14, 17 are stacked on the surface of the electrically conductive metal core 12 with different particle sizes. The shared SEI film 18a is presented between some of the SEI films 18 of the adjacent silicon or silicon compound particles 14, 17.

Compared with the SEI film directly formed on the surface of the electrically conductive metal core 12, the SEI film formed on the surface of the silicon or silicon compound particles 14, 17 is thinner, more stable and easier for lithium ions to pass through, that lead to improve coulombic efficiency of the silicon or silicon compound particles 14,17. Compared with the US Patent Application No. 16/514953, which uses the low melting point metal to fully cover silicon or silicon compound particles, most of the surface of the electrically conductive metal core 12 of this invention is covered by silicon or silicon compound particles 14. The contact area between the electrically conductive metal core 12 and the electrolyte can be greatly reduced. In addition, the invention also reduces the proportion of inferior SEI film directly formed on the surface of the electrically conductive metal core 12 that are not suitable for the passage of the lithium ions.

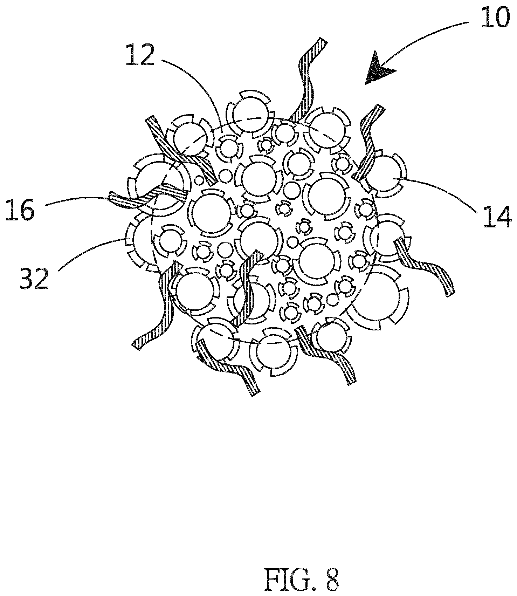

In addition, as shown in FIG. 8, a carbide shell 32 is formed on at least part of the surface, such as 75%, of the silicon or silicon compound particles 14 to minimize the direct contact between the electrolyte and the silicon or silicon compound particles 14. Thus, the electrolyte decomposition caused by dangling bonds on the surface of silicon is reduced. Preferably, the carbide shell 32 is formed on more than 90% of the surface of the silicon or silicon compound particles 14.

Accordingly, this invention provides a composite negative active material ball, which includes an electrically conductive metal core, which is substantially without pores, and a plurality of silicon or silicon compound particles, which is distributed on the surface of electrically conductive metal core. Parts of the silicon or silicon compound particles, which are directly contacted to the outer surface of the electrically conductive metal core, are embedded into the electrically conductive metal core. When the volume of the silicon or silicon compound particles are changed caused by alloying/dealloying resulting from lithium-ion extraction and insertion, the silicon or silicon compound particles can maintain the direct contact of the electrically conductive metal core via the embedded portion to make the composite negative active material ball maintain good electron transfer characteristics. Also, the shared SEI film is presented between the adjacent silicon or silicon compound particles. Most of the outer surface of the electrically conductive metal core are covered by the silicon or silicon compound particles. Therefore, the loss of the electrolyte is efficiently reduced. Moreover, the material of the electrically conductive metal core is selected from the material capable of alloying with the lithium ions. A prelithiation can be processed on the surface of the electrically conductive metal core before the silicon or silicon compound particles are assembled. Therefore, the electrically conductive metal core is used as a lithium source to reduce the irreversible loss of the lithium ions. Alternatively, the electrically conductive metal core serves as a diffusion host for the lithium to expand the amount of the received or released lithium of the composite negative active material ball to improve operation performance of the electrochemical system. Hence, the battery cell composed of the composite negative active material balls of this invention can have excellent reproducibility of charge and discharge performance based on the above-mentioned advantages.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A composite negative active material ball, comprising:
an electrically conductive metal core, having a first average particle size at a room temperature; and
a plurality of silicon or silicon compound particles, having a second average particle size and distributed on the surface of electrically conductive metal core, wherein the silicon or silicon compound particles are directly contacted to an outer surface of the electrically conductive metal core and parts of the silicon or silicon compound particles are embedded into the electrically conductive metal core, and the electrically conductive metal core serves as the common internal electrically conductive element of the silicon or silicon compound particles;
wherein the first average particle size is more than ten times the second average particle size.

2. The composite negative active material ball according to claim 1, wherein the electrically conductive metal core is composed of a metal with a low melting point, which is lower than 232°C.

3. The composite negative active material ball according to claim 2, wherein the electrically conductive metal core is an alloy formed by mixing at least two of the materials selected from indium, tin, aluminum, bismuth or germanium.

4. The composite negative active material ball according to claim 1, wherein a material of the silicon or silicon compound particles is selected from pure silicon, silicon oxide, silicon nitride or a combinations thereof.

5. The composite negative active material ball according to claim 1, wherein a particle size of the silicon or silicon compound particles is ranging from 10 to 500 nanometer.

6. The composite negative active material ball according to claim 1, wherein the electrically conductive metal core is substantially without pores.

7. The composite negative active material ball according to claim 1, wherein the electrically conductive metal core is capable of alloying with lithium ions at a first electric potential, and the silicon or silicon compound particles are capable of alloying with the lithium ions at a second electric potential, wherein the first electric potential is higher than the second electric potential.

8. The composite negative active material ball according to claim 1, further comprising an electrically conductive material, wherein parts of the electrically conductive material is directly contacted to an outer surface of the electrically conductive metal core.

9. The composite negative active material ball according to claim 1, wherein at least 50% of an outer surface of the electrically conductive metal core are covered by the silicon or silicon compound particles.

10. The composite negative active material ball according to claim 1, wherein the first average particle size is ranging from 0.1 micrometer to 50 micrometer, and the second average particle size is ranging from 10 nanometer to 500 nanometer.
